(19) Europäisches Patentamt
European Patent Office
Office européen des brevets

(11) Numéro de publication: **0 002 974**
**B1**

# (12) FASCICULE DE BREVET EUROPEEN

(45) Date de publication du fascicule de brevet: **29.04.81**

(51) Int. Cl.³: **C 08 F 120/28,** C 08 F 8/26 // C08F8/14

(21) Numéro de dépôt: **78400229.7**

(22) Date de dépôt: **12.12.78**

## (54) Prépolymères acryliques thermoplastiques réactifs et leur procédé d'obtention.

(30) Priorité: **23.12.77 FR 7739003**

(43) Date de publication de la demande: **11.07.79 Bulletin 79/14**

(45) Mention de la délivrance du brevet: **29.04.81 Bulletin 81/17**

(84) Etats contractants désignés: **BE CH DE GB LU NL SE**

(56) Documents cités:
**FR-A-2 132 740**
**US-A-2 384 124**
**US-A-3 384 628**
**US-A-3 607 847**
**US-A-3 681 314**

(73) Titulaire: **SOCIETE NATIONALE DES POUDRES ET EXPLOSIFS, 12, quai Henri IV, F-75181 PARIS CEDEX 04 (FR)**

(72) Inventeur: **Coqueugniot, Annick, 85, rue de l'Abbaye, F-91610 Ballancourt (FR)**
Inventeur: **Piteau, Marc, 38, avenue de Ballancourt, F-91710 Itteville (FR)**
Inventeur: **Senet, Jean-Pierre, 19, Chemin Latéral, Livry sur Seine F-77000 Melun (FR)**

**EP 0 002 974 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Prépolymères acryliques thermoplastiques réactifs et leur procédé d'obtention

La présente invention concerne de nouveaux prépolymères acryliques thermoplastiques réactifs ainsi que leur procédé de préparation. Ces nouveaux prépolymères sont particulièrement intéressants dans l'industrie du moulage de par leurs propriétés thermoplastiques.

Les matières thermoplastiques sont très recherchées dans l'industrie du moulage et les polyesters acryliques ou méthacryliques sont connus pour leur propriétés thermoplastiques. Néanmoins, les polyacrylates ou polyméthacrylates purs ne conviennent pas pour toutes les applications en raison de leur mauvaise tenue mécanique aux chocs et aux rayures ainsi que leur trop grande viscosité à l'état fondu qui les rend inaptes à l'injection dans les domaines où une grande précision est exigée, comme en optique par exemple. Par ailleurs, les polyacrylates ou polyméthacrylates présentent le défaut de tous les composés thermoplastiques à savoir une mauvaise tenue à la température. On a cherché à améliorer les propriétés des polyacrylates ou polyméthacrylates en incorporant dans la chaîne du polymère d'autres fonctions chimiques. C'est ainsi que le brevet français 2 039 075 décrit certains polyacrylates renfermant des fonctions carbonates.

On a également cherché, en vue d'améliorer la tenue en température des polyacrylates, à synthétiser des monomères acryliques comportant, à coté de la fonction acrylique, une fonction thermodurcissable de manière à obtenir, par polymérisation dans un premier temps de la fonction acrylique, un polymère thermoplastique, et par polymérisation ultérieure de la fonction thermodurcissable un polymère ayant une bonne tenue en température. De tels monomères sont par exemple décrits dans les brevets américains 2 384 115, 2 384 124 et 2 399 285 dans lesquels on trouve décrit le monomère de formule:

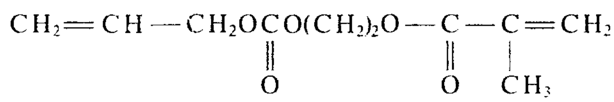

Il a cependant été constaté que dans de tels monomères il est pratiquement impossible de séparer la polymérisation acrylique thermoplastique de la polymérisation à caractère thermodurcissable et que par voie de conséquence lorsque l'on améliorait la tenue en température du produit final on rendait plus difficile sa mise en oeuvre par abaissement des propriétés thermoplastiques du polyacrylate ou du polyméthacrylate.

Le but de la présente invention est précisément de proposer des prépolymères acryliques ayant de bonnes propriétés thermoplastiques et possédant des fonctions thermodurcissables susceptibles d'améliorer, après polymérisation desdites fonctions thermodurcissables, la tenue en température du polymère final. L'invention concerne également le procédé de préparation desdits prépolymères.

Les prépolymères acryliques thermoplastiques réactifs selon l'invention répondent à la formule suivante:

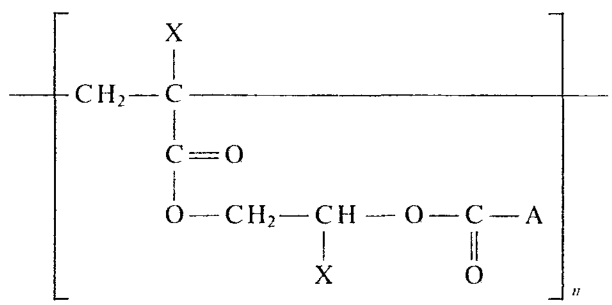

(I)

dans laquelle:

- chaque symbole X représente soit l'hydrogène, soit le groupe méthyle
- n est un nombre entier indiquant le degré de polymérisation
- A représente un groupe hydrocarboné possédant une insaturation entre deux atomes de carbone et répondant à la formule générale:

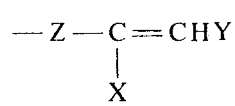

dans laquelle:
les symboles Z et Y peuvent prendre les significations suivantes:

— soit: Z = $OCH_2-$ auquel cas Y = H ou $C_6H_5$
— soit: Z = 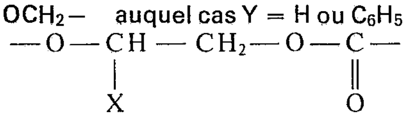 auquel cas Y = H

le symbole X ayant la même signification que précédement.

On donne maintenant un mode de préparation détaillé des prépolymères selon l'invention.

Selon l'invention les prépolymères acryliques thermoplastiques réactifs sont obtenus par polymérisation dans un solvant inerte tel que le chloroforme ou le tétrachlorure de carbone, en présence des catalyseurs usuels de polymérisation des insaturations acryliques tels que les percarbonates et les péroxydes, de monomères acryliques ou méthacryliques de formule générale:

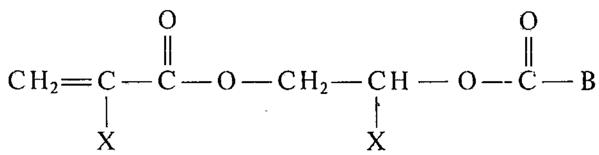 (II)

dans laquelle B représente un atome d'halogène choisi dans le groupe constitué par le fluor, le chlore ou le brome. On obtient les composés II par action de dihalogénure correspondant de l'acide carbonique sur un composé III de formule:

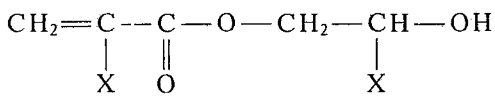 (III)

Les monomères III peuvent être obtenus d'une manière aisée par action de l'acide acrylique ou méthacrylique sur un époxyde de formule générale

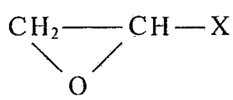

selon le schéma:

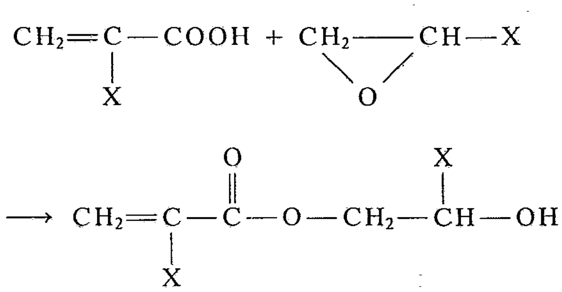 (III)

Des monomères répondant à la formule générale II sont par exemple décrits dans le brevet français 2 373 510 au nom de la demanderesse. Les monomères II conduisent par polymérisation au prépolymère IV:

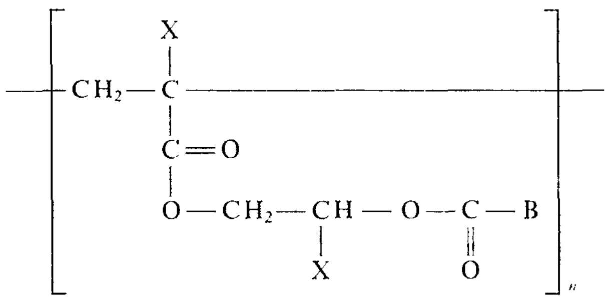

(IV)

Les prépolymères IV ainsi obtenus sont solubles dans les solvants chlorés habituels. Les prépolymères IV sont transformés en prépolymères I par réaction sur des alcools insaturés de formule générale

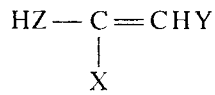

(V)

L'insaturation éthylénique de l'alcool V ayant un caractére thermodurcissable on obtient ainsi des prépolymères I thermoplastiques, aptes à l'injection et pouvant être ultérieurement durcis par réticulation de ladite insaturation éthylénique.

Les prépolymères I ont de préférence une masse moléculaire en nombre comprise entre 5000 et 10 000, ce qui correspond à un indice n compris entre 25 et 50.

Comme il a déjà été dit plus haut les prépolymères selon l'invention conviennent bien comme matières premières pour l'obtention de films par photoréticulation ou pour l'obtention de pièces dures réalisées par injection et notamment de pièces d'optique.

L'invention sera mieux comprise à l'aide des exemples de mise en oeuvre donnés ci-après à titre non limitatif.

## Exemple 1

Dans un réacteur de 1 litre on place 450 $cm^3$ de chloroforme, 53,5 g (0,3 mole) de chloroformiate d'acryloxy-2 éthyle et 1 g de percarbonate de cyclohexyle. Après 4 heures de reflux, on refroidit le mélange à 0° C et additionne une solution formée de 200 $cm^3$ de chloroforme, 36,6 g (0,3 mole) d'alcool cinnamique et 24 g (0,3 mole) de pyridine. Après agitation du mélange à température ambiante pendant 2 heures, on élimine sous pression réduite 400 $cm^3$ de solvant et verse le résidu dans 300 $cm^3$ d'éthanol. Le polymère précipité est isolé et séché à 50° C:

m = 38.5 g    Rdt = 48%

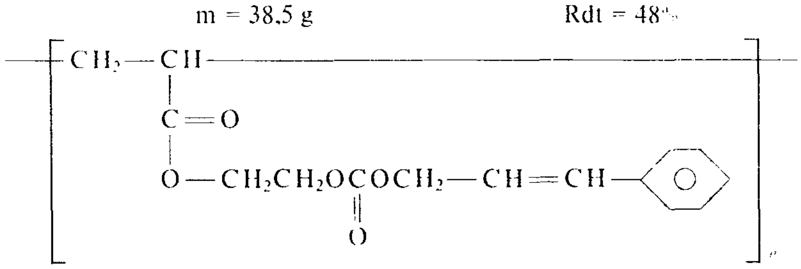

Spectre IR = $\nu$C = O (carbonate + ester) = 1730 – 1750 $cm^{-1}$
$\nu$C = C = 1630 $cm^{-1}$

Exemple II

La réaction est identique à l'exemple 1, mais le chloroformiate utilisé est celui d'éthyl-2 méthacrylate. On obtient 52 g (62%) de polymère répondant à la formule:

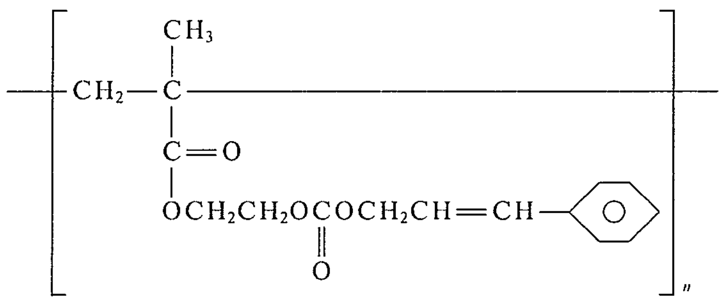

Spectre IR = $\nu$C = O (carbonate+ester) = 1730–1750 $cm^{-1}$
$\nu$C = C = 1630 $cm^{-1}$

Exemple II

La mode opératoire étant celui de l'exemple I, on remplace l'alcool cinnamique par de l'hydroxy-2 éthylacrylate. 33,5 g (45%) de polymère répondant à la formule suivante sont isolés:

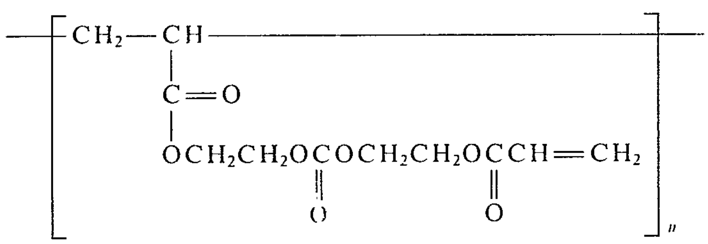

Spectre IR = $\nu$C = O (carbonate+ester) = 1730–1750 $cm^{-1}$
$\nu$C = C = 1640 $cm^{-1}$

Exemple IV

Le mode opératoire est identique à l'exemple 1, mais on utilise le chloroformiate de méthacryloxy-2 éthyle et l'hydroxyéthylacrylate. On obtient ainsi 39 g (50%) de polymère de formule:

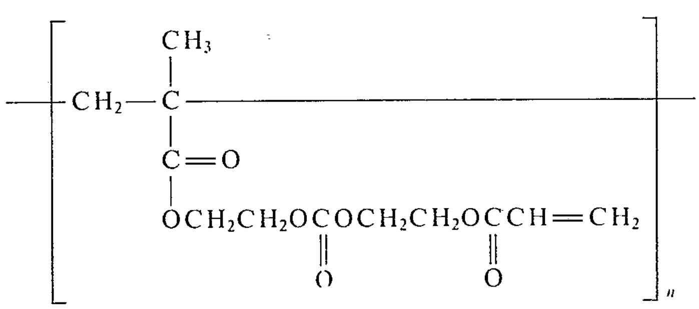

Spectre IR = $\nu$C = O (carbonate+ester) = 1730–1750 $cm^{-1}$
$\nu$C = C = 1640 $cm^{-1}$

Exemple V

Cette exemple illustre une mise en oeuvre du prépolymère obtenu dans l'exemple II.

Le prépolymère obtenu dans l'exemple II est mis en solution dans du chlorure de méthylène, à une partie de la solution obtenue on ajoute 5% en poids d'Irgacure qui est un photoinitiateur commercialisé par Ciba-Geigy et qui est un diéther de la benzoïne répondant à la formule:

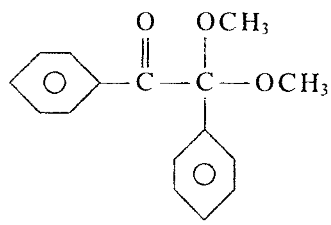

On étale la solution obtenue en film sur un support en verre et on l'expose pendant 1 minute aux rayons UV. Une demi-heure après l'exposition on mesure la dureté Persoz du film ainsi obtenu: on obtient une dureté de 106 secondes.

Exemple VI

On reprend le même mode opératoire que dans l'exemple précédent avec le prépolymère de l'exemple IV. On obtient un film dont la dureté Persoz est de 256 secondes.

**Revendications**

1. Prépolymères acryliques thermoplastiques réactifs ayant une masse moléculaire en nombre comprise entre 5000 et 10 000 et de formule:

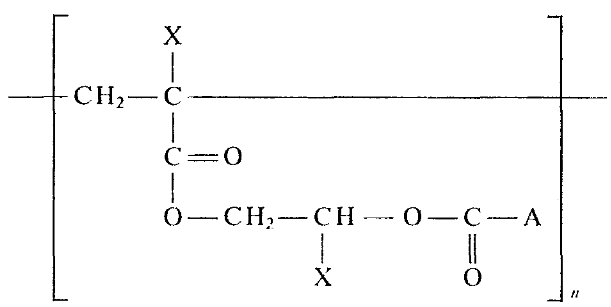

(I)

dans laquelle:

- chaque symbole X représente soit l'hydrogène, soit le groupe méthyle,
- n est un nombre entier représentant le degré de polymérisation compris entre 25 et 50,
- A représente un groupe hydrocarboné possédant une insaturation entre deux atomes de carbone et répondant à la formule générale:

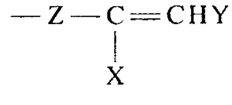

dans laquelle les symboles Z et Y peuvent prendre les significations suivantes:

soit Z = $-O-CH_2-$ et Y = H ou $C_6H_5$

soit Z = 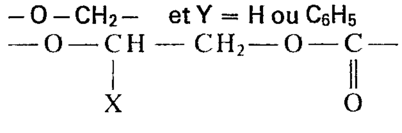 et Y = H

le symbole X ayant la même signification que précédemment.

2. Procédé de préparation des prépolymères acryliques thermoplastiques réactifs selon la revendication 1, caractérisé en ce que l'on fait polymériser dans un solvant inerte, en présence d'un catalyseur de polymérisation des insaturation acryliques, un monomère acrylique ou méthacrylique de formule générale:

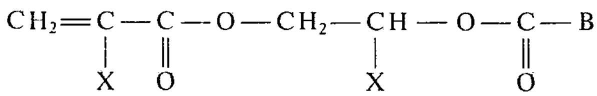 (II)

dans laquelle B représente un atome d'halogène choisi dans le groupe constitué par le fluor, le chlore ou le brome et en ce qu'on condense sur le produit ainsi obtenu un alcool de formule générale:

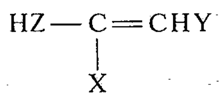 (V)

les symboles X, Z, Y ayant les mêmes significations que précédemment.

**Patentansprüche**

1. Reaktive thermoplastische Acrylpräpolymere mit einem Zahlenmittel des Molekulargewichts zwischen 5000 und 10 000 der Formel I

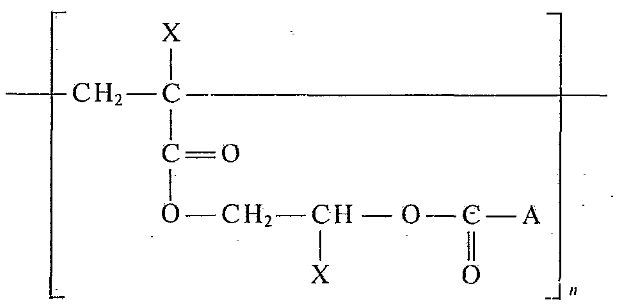 (I)

in der bedeuten:

X H oder Methyl,
n den Polymerisationsgrad als ganze Zahl zwischen 25 und 50 und
A eine C=C-ungesättigte Kohlenwasserstoffgruppe der allgemeinen Formel

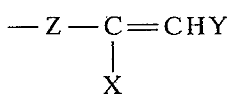

in der die Gruppen Z und Y folgende Bedeutungen besitzen können:

entweder Z = $-O-CH_2-$ und Y = H oder $C_6H_5$
oder Z = 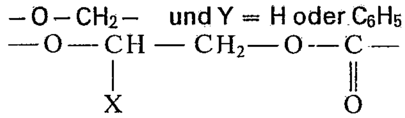 und Y = H,

mit X wie oben.

2. Verfahren zur Herstellung der reaktiven thermoplastischen Acrylpräpolymeren nach Anspruch 1, dadurch gekennzeichnet, daß ein Acrylmonomer oder Methacrylmonomer der allgemeinen Formel (II)

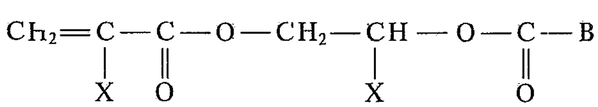 (II)

mit B = F, Cl oder Br

in einem inerten Lösungsmittel in Gegenwart eines Katalysators für die Polymerisation ungesättigter Acrylverbindungen polymerisiert wird, worauf das so erhaltene Produkt mit einem Alkohol der allgemeinen Formel (V)

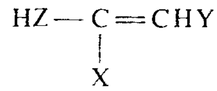 (V)

mit X, Z und Y wie in Anspruch 1

kondensiert wird.

**Claims**

1. Reactive thermoplastic acrylic prepolymers having a molecular mass in the range 5,000 to 10,000 and being of general formula I

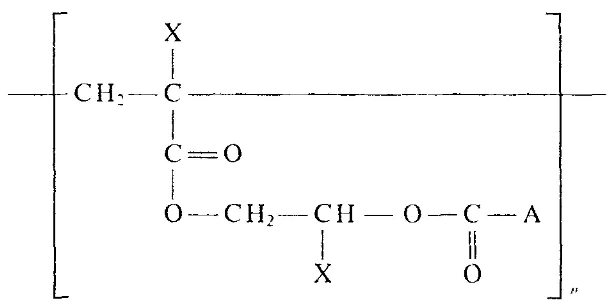 (I)

wherein

each X is hydrogen or methyl,
n is an integer from 25 to 50 representing the degree of polymerisation, and
A is a hydrocarbon group with one double bond between carbon atoms and has the general formula

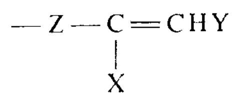

wherein X has the meaning given above, and either
Z is $-O-CH_2-$ and Y is H or $C_6H_5$, or
Z is 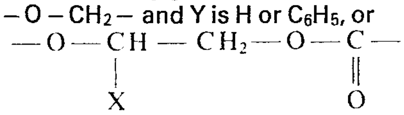 and Y is H.

2. Process for preparing the reactive thermoplastic acrylic prepolymers according to claim 1, characterised in causing an acrylic or methacrylic monomer of general formula II

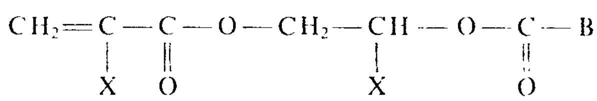 (II)

wherein B is a halogen atom selected from the group that consists of fluorine, chlorine and bromine, to polymerise in an inert solvent in the presence of a catalyst for the polymerisation of acrylic unsaturation, and condensing with the product obtained an alcohol of general formula V

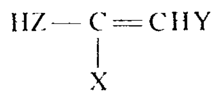 (V)

wherein X, Z and Y have the meanings given above.